# EUROPÄISCHE PATENTSCHRIFT

(11) **EP 0 487 938 B1**
(45) Veröffentlichungstag und Bekanntmachung des Hinweises auf die Patenterteilung: **02.08.1995**
(21) Anmeldenummer: 91118737.5
(22) Anmeldetag: 04.11.1991
(51) Int. Cl.: B60T 13/52

(54) **Unterdruck-Bremskraftverstärker**
Vacuum brake booster
Servofrein à vide

(30) Priorität: 17.11.1990 DE 4036744
(43) Veröffentlichungstag der Anmeldung: 03.06.1992
(73) Patentinhaber: ITT Automotive Europe GmbH, 60488 Frankfurt (DE)
(72) Erfinder: Bauer, Jürgen, W-6200 Wiesbaden (DE); Göbel, Thomas, W-6000 Frankfurt/Main 1 (DE)

(56) Entgegenhaltungen:
- DE-A- 3 838 439
- DE-A- 3 918 012

## Beschreibung

Die Erfindung betrifft einen Unterdruck-Bremskraftverstärker für Kraftfahrzeuge, dessen Verstärkergehäuse durch einen Verstärkerkolben in eine Unterdruckkammer sowie eine Arbeitskammer unterteilt ist und aus zwei miteinander abgedichtet verbundenen Verstärkergehäusehälften besteht, mit einer Einrichung zur Überwachung der Lage des Verstärkerkolbens, die an der die Unterdruckkammer begrenzenden Verstärkergehäusehälfte angebracht ist und in deren Gehäuse ein mit elektrischen Kontaktelementen zusammenwirkendes Schaltelement vorgesehen ist, das mittels eines unter Vorspannung einer Druckfeder am Verstärkerkolben anliegenden Betätigungselementes betätigbar ist.

Eine Einrichtung zur Überwachung der Lage des Verstärkerkolbens eines Unterdruck-Bremskraftverstärkers ist z.B. aus der europäischen Patentanmeldung 0 353 117 bekannt. Die vorbekannte Einrichtung besteht aus einem zylindrischen Gehäuse aus elektrisch leitendem Werkstoff, in dessen Bohrung ein durch den Verstärkerkolben verschiebbares Betätigungselement geführt ist. Das unter der Vorspannung einer Feder am Verstärkerkolben anliegende Betätigungselement trägt an seinem ins Innere des Gehäuses hineinragenden Ende eine elastische metallische Zunge, die mit einer potentiometrischen Widerstandsbahn zusammenwirkt, so daß beim Verschieben des Betätigungselementes eine Änderung des Widerstandswertes der beschriebenen Anordnung auftritt. Diese Widerstandsänderung wird mittels einer an den elektrischen Ausgang der Anordnung angeschlossenen elektronischen Schaltung in ein elektrisches Signal umgewandelt, dessen Wert der Lage des Verstärkerkolbens entspricht.

Als weniger vorteilhaft wird bei der bekannten Einrichtung die Tatsache empfunden, daß eine genaue Einstellung deren Schaltpunkte nur unter Verwendung von Systemen zur automatischen Änderung der Länge des Betätigungselementes erfolgen kann, die einen Ausgleich von im Bremskraftverstärker auftretenden Herstellungstoleranzen, d.h. Abweichungen des Abstands zwischen Verstärkerkolben und -gehäuse in Lösestellung, ermöglichen.

Es ist daher Aufgabe der vorliegenden Erfindung einen Unterdruck-Bremskraftverstärker mit einer Einrichtung zur Überwachung der Lage seines Verstärkerkolbens der eingangs genannten Gattung vorzuschlagen, die auf eine kostensparende Art eine genaue Einstellung ihrer Schaltpunkte ermöglicht. Dabei soll auf den Einsatz von aufwendigen automatischen Systemen verzichtet werden können.

Eine erste Lösung dieser Aufgabe besteht darin, daß das Betätigungselement und das Schaltelement relativ zueinander bewegbar angeordnet sind, wobei die Lage des Betätigungselementes gegenüber dem Verstärkerkolben einstellbar ist.

Zur Konkretisierung des Erfindungsgedankens ist bei einer vorteilhaften Weiterbildung vorgeschlagen, daß das Betätigungselement durch eine im Schaltelement vorgesehene Öffnung hindurchragt und mittels eines elastischen, vorzugsweise ringförmigen Teiles das Schaltelement an einem im Gehäuse ausgebildeten Anschlag hält, wobei das elastische Teil am ins Gehäuse hineinragenden Ende des Betätigungselementes angeordnet ist und mit ihm durch eine form- bzw. kraftschlüssige Verbindung verbunden ist.

Um den in der Unterdruckkammer des erfindungsgemäßen Unterdruck-Bremskraftverstärkers herrschenden Unterdruck überwachen zu können, ist bei einer weiteren Ausführung des Erfindungsgegenstandes vorgesehen, daß die Einrichtung zur Überwachung der Lage des Verstärkerkolbens eine Anordnung zur Überwachung des Unterdruckes umfaßt.
Dabei ist im Gehäuse der Einrichtung ein mit dem Unterdruck beaufschlagbarer pneumatischer Kolben abgedichtet geführt, der eine elektrische Kontakteinrichtung betätigt, die vorzugsweise als Öffner ausgebildet ist und aus einer federnd vorgespannten Kontaktscheibe besteht, die mit einem Kontaktpaar zusammenwirkt.

Eine erhebliche Verkürzung der Baulänge der Einrichtung zur Überwachung der Lage des Verstärkerkolbens wird nach einem weiteren Erfindungsmerkmal dadurch erreicht, daß das Betätigungselement zweiteilig ausgebildet ist und aus einem mit dem Verstärkerkolben zusammenwirkenden ersten Teil sowie einem mit dem Schaltelement zusammenwirkenden zweiten Teil besteht, die ineinander teleskopartig geführt sind, daß der erste Teil gegenüber dem zweiten Teil mittels einer dazwischen angeordneten ersten Druckfeder und der zweite Teil gegenüber dem Gehäuse mittels einer dazwischen angeordneten zweiten Druckfeder vorgespannt sind und das der erste Teil in Ruhestellung mittels einer elastischen Hülse am zweiten Teil und der zweite Teil mittels des Schaltelementes am Gehäuse anliegt.

Eine zweite Lösung der eingangs gestellten Aufgabe besteht darin, daß das Betätigungselement und das Schaltelement relativ zueinander bewegbar angeordnet sind, daß das Betätigungselement zweiteilig ausgebildet ist und aus einem mit dem Verstärkerkolben zusammenwirkenden ersten Teil sowie einem mit dem Schaltelement zusammenwirkenden zweiten Teil besteht, die ineinander teleskopartig geführt sind, daß der erste Teil gegenüber dem zweiten Teil mittels einer dazwischen angeordneten ersten Druckfeder und der zweite Teil gegenüber dem Gehäuse mittels einer dazwischen angeordneten zweiten Druckfeder vorgespannt sind, daß der erste Teil in Ruhestellung am zweiten Teil und der zweite Teil mittels des Schaltelementes am Gehäuse anliegt und daß die Lage der Kontaktelemente gegenüber dem Schaltelement einstellbar ist. Dabei ist es besonders vorteilhaft, wenn die elektrischen Kontaktelemente durch in einem ins Gehäuse einschraubbaren Verschlußstopfen eingebettete Kontaktfahnen gebildet sind.

Ein Verfahren zum Einstellen des Schaltpunktes der Einrichtung zur Überwachung der Lage des Verstärkerkolbens eines Bremskraftverstärkers nach der ersten Lösung zeichnet sich dadurch aus, daß das Betätigungselement nach dem Befestigen des Gehäuses am Verstärkergehäuse bei gleichzeitiger Anlage des elastischen Teiles am sich am Gehäuse abstützenden Schaltelement in Richtung auf den Verstärkerkolben zu mit einer Kraft bis zur Anlage am Verstärkerkolben beaufschlagt wird, während der Schaltpunkt bei der Ausführung der Erfindung mit dem zweiteiligen Betätigungselement eingestellt wird, indem der erste Teil des Betätigungselementes nach dem Befestigen des Gehäuses am Verstärkergehäuse bei gleichzeitiger Anlage der elastischen Hülse am sich am Gehäuse abstützenden zweiten Teil in Richtung auf den Verstärkerkolben zu mit einer Kraft bis zur Anlage am Verstärkerkolben beaufschlagt wird.

Der Schaltpunkt der Einrichtung zur Überwachung der Lage des Verstärkerkolbens eines Bremskraftverstärkers nach der zweiten Lösung wird schließlich nach einem zweiten erfindungsgemäßen Verfahren eingestellt, dessen Merkmale darin bestehen, daß der Abstand zwischen der am Gehäuse ausgebildeten, im eingebauten Zustand der Einrichtung am Dichtstopfen anliegenden Auflagefläche und dem Ende des ersten Teiles des Betätigungselementes so bemessen ist, daß der erste Teil unter axialer Vorspannung am Verstärkerkolben anliegt, und daß nach dem Einbau der Abstand zwischen den Kontaktelementen und dem Schaltelement so lange geändert wird, bis eine Kontaktgabe stattfindet, wonach die Kontaktelemente in eine Lage gegenüber dem Schaltelement gebracht werden, in der zwischen ihnen und dem Schaltelement ein geringer axialer Abstand vorhanden ist.
Die Änderung der Lage der Kontaktelemente gegenüber dem Schaltelement erfolgt dabei vorzugsweise durch Drehen des Verschlußstopfens.

Die Erfindung ist nachfolgend anhand von vier in der beiliegenden Zeichnung dargestellten Ausführungsbeispielen näher erläutert.

Es zeigt:
- Fig. 1: eine erste Ausführungsform eines erfindungsgemäßen Unterdruck-Bremskraftverstärkers in teilweise weggebrochener Schnittdarstellung;
- Fig 2: eine zweite Ausführungsform der Einrichtung zur Überwachung der Lage des Verstärkerkolbens nach der Erfindung;
- Fig. 3: einen Schnitt entlang der Linie A - A in Fig. 2, teilweise weggebrochen;
- Fig. 4 und 5: eine dritte und vierte Ausführungsform der Einrichtung zur Überwachung der Lage des Verstärkerkolbens nach der Erfindung im Axialschnitt.

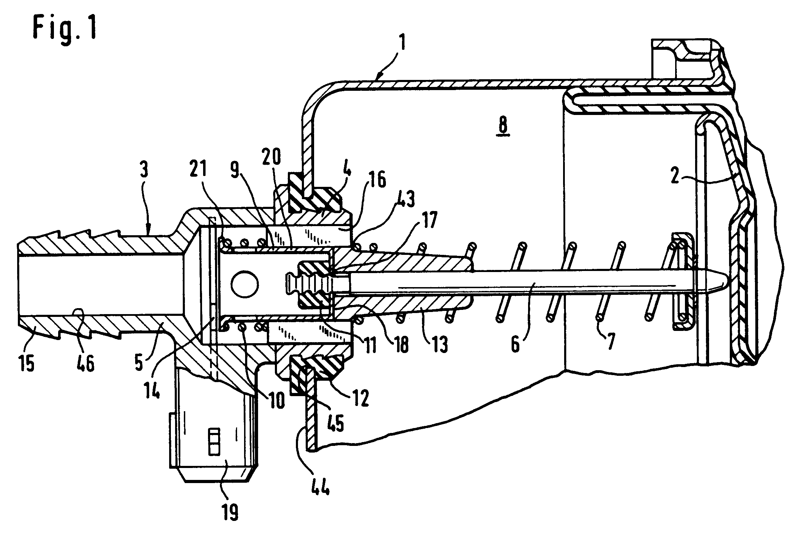

Das Verstärkergehäuse 1 eines in Fig. 1 schematisch angedeuteten Unterdruck-Bremskraftverstärkers wird mittels eines lediglich schematisch dargestellten Verstärkerkolbens 2 in eine nicht gezeigte, rechts vom Verstärkerkolben 2 liegende Arbeitskammer sowie eine Unterdruckkammer 8 unterteilt. Die Unterdruckkammmer 8 ist nach außen hin durch eine erste Verstärkergehäusehälfte 43 begrenzt, deren senkrecht stehende Stirnfläche 44 eine Öffnung 45 aufweist, die einen elastischen Dichtstopfen 12 aufnimmt, in dem ein Gehäuse 3 einer Einrichtung zur Überwachung der Lage des Verstärkerkolbens 2 eingeknöpft ist. Das Gehäuse 3 ist dabei zweiteilig ausgebildet und besteht aus einem sich durch den Dichtstopfen 12 hindurch erstreckenden ersten Gehäuseteil 4 sowie einem einen Unterdruckanschluß 15 bildenden zweiten Gehäuseteil 5, an dem ein Teil eines elektrischen Steckeranschlusses 19 angeformt ist. Im Gehäuseinneren befinden sich zwei als flache metallische Streifen ausgebildete Kontaktelemente 14, die mittels eines topfförmigen Schaltelementes 9 elektrisch verbindbar sind und deren aus dem zweiten Gehäuseteil 5 herausragende Enden weitere Teile des vorhin erwähnten Steckeranschlusses 19 bilden. Der erste Gehäuseteil 4 weist dabei sowohl eine in die Unterdruckkammer 8 hineinragende axiale Verlängerung 13 auf, die der Führung eines unter Vorspannung einer ersten Druckfeder 7 am Verstärkerkolben 2 anliegenden Betätigungselementes 6 dient, als auch Luftführungskanäle 16, die ein Evakuieren der Unterdruckkammer 8 ermöglichen. Das ins Gehäuse 3 hineinragende Ende des Betätigungselementes 6 erstreckt sich mit radialem Spiel durch eine im topfförmigen Schaltelement 9 vorgesehene Öffnung 17 und trägt ein elastisches ringförmiges Teil 11, das am Schaltelement 9 axial anliegt und dieses Teil gegen einen am ersten Gehäuseteil 4 ausgebildeten Anschlag 18 drückt. Das Ende des Betätigungselementes 6 ist dabei vorzugsweise mit einem im Schnitt wellenförmigen Profil versehen, das eine form- bzw. kraftschlüssige Verbindung zwischen dem Ende und dem beispielsweise aus Gummi oder Kunststoff hergestellten ringförmigen Teil 11 gewährleistet. Die vorhin erwähnten Luftführungskanäle 16 sind dabei durch im ersten Gehäuseteil 4 ausgebildete Hohlzylindersegmente 20 begrenzt, die das Schaltelement 9 führen und eine Anlagefläche für eine zweite Druckfeder 10 bilden, die das Schaltelement 9 in Richtung auf die Kontaktelemente 14 zu vorspannt. Die zweite Druckfeder 10 stützt sich dabei an radial sich erstreckenden Kragen 21 des Schaltelementes 9 ab, wobei ihre Federrate wesentlich kleiner ist als die der ersten Druckfeder 7.

Bei der Betätigung des Unterdruck-Bremskraftverstärkers, bei der sich der Verstärkerkolben 2 in der Zeichnung nach links bewegt, wird das Betätigungselement 6 unter gleichzeitigem Zusammendrücken der ersten, stärkeren Druckfeder 7 verschoben, so daß das Schaltelement 9 entlastet und durch die Wirkung der zweiten Druckfeder 10 gegen die Kontakelemente 14 gedrückt wird. So wird zwischen den Kontaktelementen 14 eine elektrisch leitende Verbindung hergestellt. Das Ende des Betätigungselementes 6 kann dabei bei vollem Hub des Verstärkerkolbens 2 bis in den Bereich des Unterdruckanschlusses 15 verschoben werden.

Bei der Montage der erfindungsgemäßen Einrichtung zur Überwachung der Lage des Verstärkerkolbens 2 wird deren Gehäuse 3 mittels des Dichtstopfens 12 unterdruckdicht in das Verstärkergehäuse 1 eingeknöpft. Die Länge des Betätigungselementes 6 ist dabei so gewählt, daß das Betätigungselement 6 den Verstärkerkolben 2 nicht berührt. Nun wird durch die Bohrung 46 des koaxial zum Betätigungselement 6 angeordneten Unterdruckanschlusses 15 ein geeignetes Werkzeug eingeführt, mit dessen Hilfe das Betätigungselement 6 so lange verschoben wird, bis es am Verstärkerkolben 2 anliegt. Das elastische ringförmige Teil 11 stützt sich bei diesem Einstellvorgang über das Schaltelement 9 am ersten Gehäuseteil 4 ab.

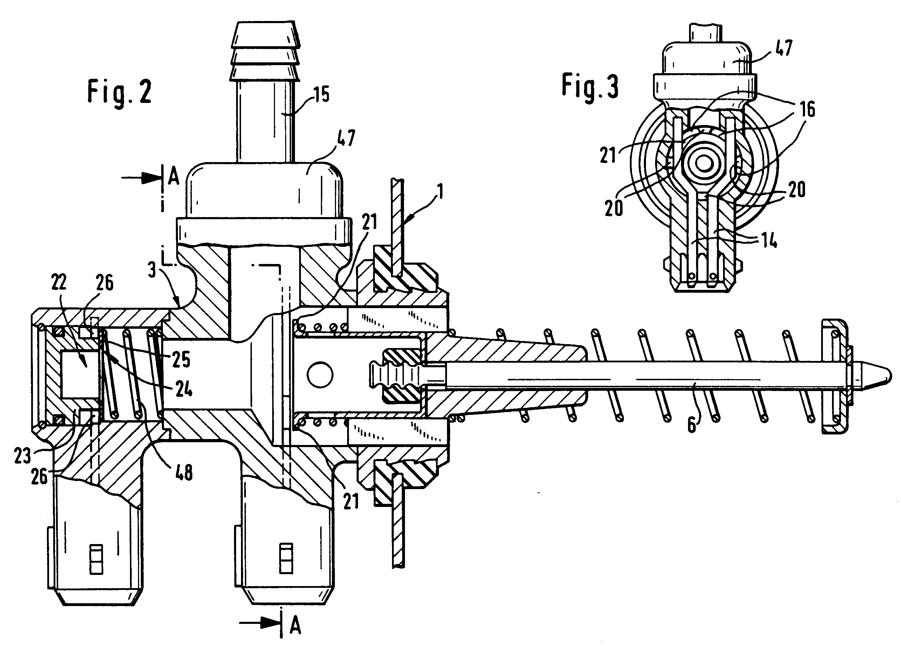

Bei der in Fig. 2 gezeigten zweiten Ausführungsform der erfindungsgemäßen Einrichtung zur Überwachung der Lage des Verstärkerkolbens ist der Unterdruckanschluß 15 senkrecht zur Längsachse des Betätigungselementes 6 angeordnet, wobei in seinem Inneren ein Rückschlagventil angeordnet ist, das das Bezugszeichen 47 trägt. Um den in der Unterdruckkammer 8 des Bremskraftverstärkers herrschenden Unterdruck überwachen zu können, ist an dem dem Verstärkergehäuse 1 abgewandten Ende des Gehäuses 3 eine Anordnung 22 vorgesehen, die durch einen im Gehäuse 3 abgedichtet geführten pneumatischen Kolben 23 sowie eine durch den Kolben 23 betätigbare elektrische Kontakteinrichtung 24 gebildet ist. Die Kontakteinrichtung 24 ist dabei vorzugsweise als Öffner ausgebildet und besteht aus einer Kontaktscheibe 25, die unter Vorspannung einer dritten Druckfeder 48 an einem schematisch dargestellten Kontaktpaar 26 anliegt.

Wird der pneumatische Kolben 23 beim Evakuieren des Bremskraftverstärkers mit einem Unterdruck beaufschlagt, so wird er entgegen der Kraft der dritten Druckfeder 48 in der Zeichnung nach rechts verschoben, wodurch die Kontaktscheibe 25 außer Eingriff mit dem Kontaktpaar 26 gebracht und die Kontaktgabe unterbrochen wird.

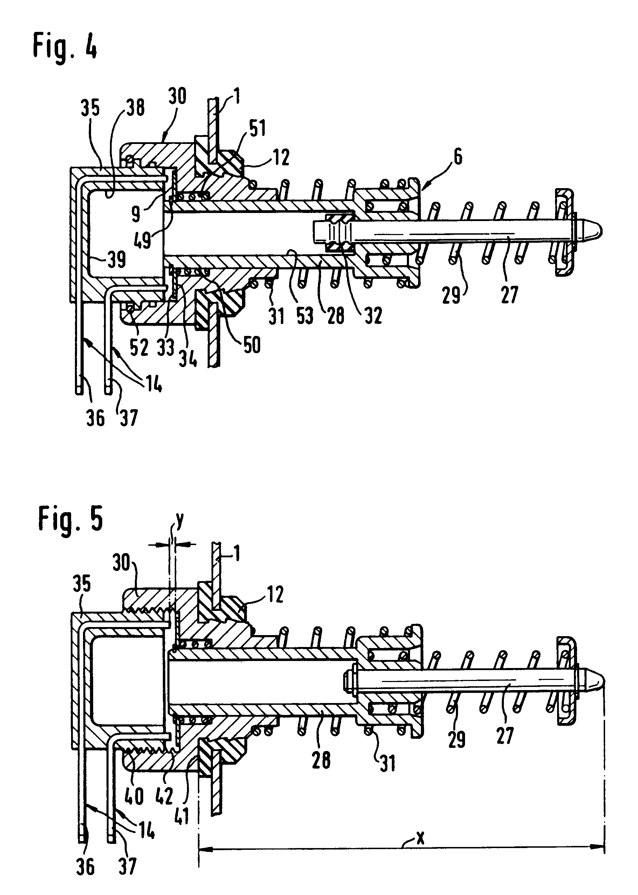

Bei den in den Figuren 4 und 5 gezeigten Ausführungen ist das Betätigungsglied 6 zweiteilig ausgebildet und besteht vorzugsweise aus einem ersten Teil 27, der, vorgespannt durch eine erste Druckfeder 29 gegenüber einem zweiten Teil 28, mittels einer elastischen Hülse 32 am zweiten Teil 28 anschlägt und im eingebauten Zustand mit dem Verstärkerkolben 2 zusammenwirkt. Der erste Teil 27 ist dabei im zweiten Teil 28 teleskopartig geführt, der gegenüber dem Gehäuse 30 durch eine zweite Druckfeder 31 vorgespannt ist. Die Anordnung ist dabei vorzugsweise derart getroffen, daß die Federrate der ersten Druckfeder 29 erheblich größer ist als die der zweiten Druckfeder 31. Das Schaltelement 9 ist bei den erwähnten Ausführungen durch eine metallische Kontaktscheibe 33 gebildet, die durch die Wirkung der zweiten Druckfeder 31 mittels eines am Ende des zweiten Teiles 28 angeordneten Sicherungsringes 49 an einer im Gehäuse 30 ausgebildeten Ringfläche 34 anliegt. Die Kontaktscheibe 33 ist dabei in Richtung auf die Kontaktelemente 14 zu mittels einer dritten Druckfeder 50 vorgespannt, die in einer im Gehäuse 30 ausgebildeten zylindrischen Ausnehmung 51 angeordnet ist. Die Kontaktelemente 14 sind durch zwei in einem das Gehäuse 30 unterdruckdicht verschließenden zylindrischen Verschlußstopfen 35 eingebettete rechtwinklige Kontaktfahnen 36, 37 gebildet. Der durch einen Sicherungsring 52 im Gehäuse 30 gehaltene Verschlußstopfen 35 weist eine zentrale zylindrische Ausnehmung 38 auf, deren Boden 39 als Anschlag für den zweiten Teil 28 des Betätigungsgliedes 6 im betätigten Zustand dient.

Bei der Montage der in Fig. 4 gezeigten Einrichtung wird genauso wie bei der Ausführung nach Fig. 1 das Gehäuse 30 mittels des Dichtstopfens 12 unterdruckdicht in das Verstärkergehäuse 1 eingeknöpft. Nun wird durch das offene Ende des Gehäuses 30 bzw. die im zweiten Teil 28 vorgesehene Bohrung 53 ein geeignetes Werkzeug eingeführt, mit dessen Hilfe der erste Teil 27 des Betätigungselementes 6 so lange verschoben wird, bis er am Verstärkerkolben zur Anlage kommt. Die elastische Hülse 32 stützt sich bei dem beschriebenen Einstellvorgang am zweiten Teil 28 des Betätigungselementes 6 ab.

Bei der Betätigung des Unterdruck-Bremskraftverstärkers wird der erste Teil 27 durch die Bewegung des nicht gezeigten Vertärkerkolbens nach links verschoben und nimmt über die erste Druckfeder 29 unter gleichzeitigem Zusammendrücken der zweiten, schwächeren Druckfeder 31 den zweiten Teil 28 mit, so daß die Kontaktscheibe 33 entlastet und durch die Wirkung der dritten Druckfeder 50 gegen die Enden der Kontaktfahnen 36, 37 gedrückt wird. So wird zwischen den Kontaktfahnen 36, 37 eine elektrisch leitende Verbindung hergestellt. Schlägt der zweite Teil 28 während der Verschiebung am Boden 39 der Ausnehmung 38 an, so kann der erste Teil 27 bei vollem Hub des Verstärkerkolbens unter gleichzeitigem Zusammendrücken der ersten Druckfeder 29 weiter ins Innere des zweiten Teiles 28 verschoben werden.

Bei der in Fig. 5 gezeigten Ausführungsform, die weitgehend mit der in Fig. 4 dargestellten übereinstimmt, ist der Abstand x zwischen dem Ende des ersten Teiles 27 und einer im montierten Zustand der Einrichtung am Dichtstopfen 12 anliegenden, am Gehäuse 30 ausgebildeten Anlagefläche 41 so bemessen, daß der erste Teil 27 mit axialer Vorspannung am Verstärkerkolben anliegt. Der Verschlußstopfen 35 ist dabei mit einem Außengewinde 40 versehen, das mit einem im Gehäuse 30 ausgebildeten Innengewinde 42 zusammenwirkt. Bei der Einstellung des Schaltpunktes der in Fig. 5 gezeigten Einrichtung wird der axiale Abstand y zwischen den Enden der Kontaktfahnen 36, 37 und dem Schaltelement 9 (Kontaktscheibe 33) durch Drehen des Verschlußstopfens 35 in einer Richtung so lange geändert, bis die Kontaktelemente 14 das Schaltelement 9 berühren. Danach wird der Verschlußstopfen 35 in der Gegenrichtung gedreht, so daß zwischen den Kontaktelementen 14 und dem Schaltelement 9 bzw. 33 ein geringer axialer Abstand eingestellt wird. Damit ist der Einstellvorgang beendet.

### BEZUGSZEICHENLISTE

- 1: Verstärkergehäuse, Bremskraftverstärker
- 2: Verstärkerkolben
- 3: Gehäuse
- 4: Gehäuseteil
- 5: Gehäuseteil
- 6: Betätigungselement
- 7: Druckfeder
- 8: Unterdruckkammer
- 9: Schaltelement
- 10: Druckfeder
- 11: Teil
- 12: Dichtstopfen
- 13: Verlängerung
- 14: Kontaktelemente
- 15: Unterdruckanschluß
- 16: Luftführungskanal
- 17: Öffnung
- 18: Anschlag
- 19: Steckeranschluß
- 20: Hohlzylindersegment
- 21: Kragen
- 22: Anordnung
- 23: Kolben
- 24: Kontakteinrichtung
- 25: Kontaktscheibe
- 26: Kontaktpaar
- 27: erster Teil
- 28: zweiter Teil
- 29: Druckfeder
- 30: Gehäuse
- 31: Druckfeder
- 32: Hülse
- 33: Kontaktscheibe
- 34: Ringfläche
- 35: Verschlußstopfen
- 36: Kontaktfahne
- 37: Kontaktfahne
- 38: Ausnehmung
- 39: Boden
- 40: Außengewinde
- 41: Anlagefläche
- 42: Innengewinde
- 43: Verstärkergehäusehälfte
- 44: Stirnfläche
- 45: Öffnung
- 46: Bohrung
- 47: Rückschlagventil
- 48: Druckfeder
- 49: Sicherungsring
- 50: Druckfeder
- 51: Ausnehmung
- 52: Sicherungsring
- 53: Bohrung
- x: Abstand
- y: Abstand

## Patentansprüche

1. Unterdruck-Bremskraftverstärker für Kraftfahrzeuge, dessen Verstärkergehäuse (1) durch einen Verstärkerkolben (2) in eine Unterdruckkammer (8) sowie eine Arbeitskammer unterteilt ist und aus zwei miteinander abgedichtet verbundenen Verstärkergehäusehälften besteht, mit einer Einrichtung zur Überwachung der Lage des Verstärkerkolbens (2), die an der die Unterdruckkammer (8) begrenzenden Verstärkergehäusehälfte angebracht ist und in deren Gehäuse ein mit elektrischen Kontaktelementen (14) zusammenwirkendes Schaltelement (9) vorgesehen ist, das mittels eines unter Vorspannung einer Druckfeder (7) am Verstärkerkolben (2) anliegenden Betätigungselementes (6) betätigbar ist, dadurch **gekennzeichnet**, daß das Betätigungselement (6) und das Schaltelement: (9) relativ zueinander bewegbar angeordnet sind, und daß die Lage des Betätigungselementes (6) gegenüber dem Verstärkerkolben (2) einstellbar ist.

2. Unterdruck-Bremskraftverstärker nach Anspruch 1, dadurch **gekennzeichnet**, daß das Betätigungselement (6) durch eine im Schaltelement (9) vorgesehene Öffnung (17) hindurchgeht und mittels eines elastischen, vorzugsweise ringförmigen Teiles (11) das Schaltelement (9) an einem im Gehäuse (4) ausgebildeten Anschlag (18) hält.

3. Unterdruck-Bremskraftverstärker nach Anspruch 2, dadurch **gekennzeichnet**, daß das elastische Teil (11) am ins Gehäuse (3) hineinragenden Ende des Betätigungselementes (6) angeordnet ist und mit ihm durch eine form- bzw. kraftschlüssige Verbindung verbunden ist.

4. Unterdruck-Bremskraftverstärker nach Anspruch 1,2, oder 3 dadurch **gekennzeichnet**, daß das Schaltelement (9) in Richtung auf die elektrischen Kontaktelemente (14) zu mittels einer Druckfeder (10) vorgespannt ist, deren Federrate wesentlich kleiner ist als die der das Betätigungselement (6) vorspannenden Druckfeder (7).

5. Unterdruck-Bremskraftverstärker nach einem der vorhergehenden Ansprüche, wobei das Gehäuse der Einrichtung zur Überwachung der Lage des Verstärkerkolbens zweiteilig ausgebildet ist und aus einem mittels eines elastischen Dichtstopfens am Verstärkergehäuse gehaltenen ersten Gehäuseteil sowie einem einen Unterdruckanschluß bildenden zweiten Gehäuseteil besteht, dadurch **gekennzeichnet**, daß der erste Gehäuseteil (4) eine der Führung des Betätigungselementes (6) dienende axiale Verlängerung (13) sowie Luftführungskanäle (16) aufweist.

6. Unterdruck-Bremskraftverstärker nach Anspruch 5, dadurch **gekennzeichnet**, daß der Unterdruckanschluß (15) koaxial zum Betätigungselement (6) angeordnet ist.

7. Unterdruck-Bremskraftverstärker nach Anspruch 5 oder 6, dadurch a **gekennzeichnet**, daß die elektrischen Kontaktelemente (14) im zweiten Gehäuseteil (5) senkrecht zur Achse des Betätigungselementes (6) in einer Ebene nebeneinanderliegend angeordnet sind und ihre aus dem zweiten Gehäuseteil (5) herausragenden Enden Teile eines elektrischen Steckeranschlusses (19) bilden.

8. Unterdruck-Bremskraftverstärker nach einem der vorhergehenden Ansprüche dadurch **gekennzeichnet**, daß das Schaltelement (9) als topfförmiges Blechteil ausgebildet ist und durch im ersten Gehäuseteil (4) die Luftführungskanäle (16) begrenzende Hohlzylindersegmente (20) geführt wird.

9. Unterdruck-Bremskraftverstärker nach Anspruch 8 dadurch **gekennzeichnet**, daß das Schaltelement (9) einen radial sich erstreckenden Kragen (21) aufweist, der als Anlagefläche für die das Schaltelement (9) vorspannende Druckfeder (10) dient.

10. Unterdruck-Bremskraftverstärker nach einem der vorhergehenden Ansprüche dadurch **gekennzeichnet**, daß die Einrichtung zur Überwachung der Lage des Verstärkerkolbens (2) eine Anordnung (22) zur Überwachung des Unterdruckes umfaßt.

11. Unterdruck-Bremskraftverstärker nach Anspruch 10 dadurch **gekennzeichnet**, daß im Gehäuse (3 bzw. 5) der Einrichtung ein mit dem Unterdruck beaufschlagbarer pneumatischer Kolben (23) abgedichtet geführt ist, der eine elektrische Kontakteinrichtung (24) betätigt.

12. Unterdruck-Bremskraftverstärker nach Anspruch 11 dadurch **gekennzeichnet**, daß die Kontakteinrichtung (24) als Öffner ausgebildet ist und aus einer federnd vorgespannten Kontaktscheibe (25) besteht, die mit einem Kontaktpaar (26) zusammenwirkt.

13. Unterdruck-Bremskraftverstärker nach Anspruch 1 dadurch **gekennzeichnet**, daß das Betätigungselement (6) zweiteilig ausgebildet ist und aus einem mit dem Verstärkerkolben (2) zusammenwirkenden ersten Teil (27) sowie einem mit dem Schaltelement (9) zusammenwirkenden zweiten Teil (28) besteht, die ineinander teleskopartig geführt sind, daß der erste Teil (27) gegenüber dem zweiten Teil (28) mittels einer dazwischen angeordneten ersten Druckfeder (29) und der zweite Teil (28) gegenüber dem Gehäuse (30) mittels einer dazwischen angeordneten zweiten Druckfeder (31) vorgespannt sind und das der erste Teil (27) in Ruhestellung mittels einer elastischen Hülse (32) am zweiten Teil (28) und der zweite Teil (28) mittels des Schaltelements (9) am Gehäuse (30) anliegt.

14. Unterdruck-Bremskraftverstärker nach Anspruch 13 dadurch **gekennzeichnet**, daß das Schaltelement (9) durch eine gegenüber dem Gehäuse (30) in Richtung auf die Kontaktelemente (14) zu federnd vorgespannte metallische Kontaktscheibe (33) gebildet ist, die in Ruhestellung an einer im Gehäuse (30) ausgebildeten Ringfläche (34) anliegt.

15. Unterdruck-Bremskraftverstärker nach Anspruch 13 dadurch **gekennzeichnet**, daß die Federrate der ersten Druckfeder (29) größer ist als die der zweiten Druckfeder (31).

16. Unterdruck-Bremskraftverstärker nach Anspruch 13 oder 14 dadurch **gekennzeichnet**, daß die elektrischen Kontaktelemente (14) durch in einem das Gehäuse (30) dicht verschließenden Verschlußstopfen (35) eingebettete Kontaktfahnen (36, 37) gebildet sind.

17. Unterdruck-Bremskraftverstärker nach Anspruch 16 dadurch **gekennzeichnet**, daß der Verschlußstopfen (35) eine zylindrische Ausnehmung (38) aufweist, deren Boden (39) bei der Betätigung des Bremkraftverstärkers (1) als Anschlag für den zweiten Teil (28) des Betätigungselementes (6) dient.

18. Unterdruck-Bremskraftverstärker nach dem Oberbegriff des Anspruchs 1 dadurch **gekennzeichnet**, daß das Betätigungselement (6) und das Schaltelement (9) relativ zueinander bewegbar angeordnet sind, daß das Betätigungselement (6) zweiteilig ausgebildet ist und aus einem mit dem Verstärkerkolben (2) zusammenwirkenden ersten Teil (27) sowie einem mit dem Schaltelement (9) zusammenwirkenden zweiten Teil (28) besteht, die ineinander teleskopartig geführt sind, daß der erste Teil (27) gegenüber dem zweiten Teil (28) mittels einer dazwischen angeordneten ersten Druckfeder (29) und der zweite Teil (28) gegenüber dem Gehäuse (30) mittels einer dazwischen angeordneten zweiten Druckfeder (31) vorgespannt sind, daß der erste Teil (27) in Ruhestellung am zweiten Teil (28) und der zweite Teil (28) mittels des Schaltelementes (9) am Gehäuse (30) anliegt und daß die Lage der Kontaktelemente (14) gegenüber dem Schaltelement (9) einstellbar ist.

19. Unterdruck-Bremskraftverstärker nach Anspruch 18 dadurch **gekennzeichnet**, daß die elektrischen Kontaktelemente (14) durch in einem ins Gehäuse (30) einschraubbaren Verschlußstopfen (35) eingebettete Kontaktfahnen (36, 37) gebildet sind.

20. Verfahren zum Einstellen des Schaltpunktes der Einrichtung zur Überwachung der Lage des Verstärkerkolbens eines Unterdruck-Bremskraftverstärkers nach Anspruch 2 dadurch **gekennzeichnet**, daß das Betätigungselement (6) nach dem Befestigen des Gehäuses (3) am Verstärkergehäuse (1) bei gleichzeitiger Anlage des elastischen Teiles (11) am sich am Gehäuse (4) abstützenden Schaltelement (9) in Richtung auf den Verstärkerkolben (2) zu mit einer Kraft bis zur Anlage am Verstärkerkolben (2) beaufschlagt wird.

21. Verfahren zum Einstellen des Schaltpunktes der Einrichtung zur Überwachung der Lage des Verstärkerkolbens eines Unterdruck-Bremskraftverstärkers nach Anspruch 13 dadurch **gekennzeichnet**, daß der erste Teil (27) des Betätigungselementes (6) nach dem Befestigen des Gehäuses (30) am Verstärkergehäuse (1) bei gleichzeitiger Anlage der elastischen Hülse (32) am sich am Gehäuse (30) abstützenden zweiten Teil (28) in Richtung auf den Verstärkerkolben (2) zu mit einer Kraft bis zur Anlage am Verstärkerkolben (2) beaufschlagt wird.

22. Verfahren zum Einstellen des Schaltpunktes der Einrichtung zur Überwachung der Lage des Verstärkerkolbens eines Unterdruck-Bremskraftverstärkers nach Anspruch 18 dadurch **gekennzeichnet**, daß der Abstand (x) zwischen der am Gehäuse (30) ausgebildeten, im eingebauten Zustand der Einrichtung am Dichtstopfen (12) anliegenden Anlagefläche (41) und dem Ende des ersten Teiles (27) des Betätigungselementes (6) so bemessen ist, daß der erste Teil (27) unter axialer Vorspannung am Verstärkerkolben (2) anliegt, und daß nach dem Einbau der Abstand (y) zwischen den Kontaktelementen (14) und dem Schaltelement (9) so lange geändert wird, bis eine Kontaktgabe stattfindet, wonach die Kontaktelemente (14) in eine Lage gegenüber dem Schaltelement (9) gebracht werden, in der zwischen ihnen und dem Schaltelement (9) ein geringer axialer Abstand vorhanden ist.

23. Verfahren zum Einstellen des Schaltpunktes der Einrichtung zur Überwachung der Lage des Verstärkerkolbens eines Unterdruck-Bremskraftverstärkers nach Anspruch 18 dadurch **gekennzeichnet**, daß der Abstand (x) zwischen der am Gehäuse (30) ausgebildeten, im eingebauten Zustand der Einrichtung am Dichtstopfen (12) anliegenden Anlagefläche (41) und dem Ende des ersten Teiles (27) des Betätigungselementes (6) so bemessen ist, daß der erste Teil (27) unter axialer Vorspannung am Verstärkerkolben (2) anliegt, und daß das Schaltelement (9) nach dem Einbau eine elektrische Verbindung der Kontaktelemente (14) herstellt, wonach die Kontaktelemente (14) in eine Lage gegenüber dem Schaltelement (9) gebracht werden, in der zwischen ihnen und dem Schaltelement (9) ein geringer axialer Abstand vorhanden ist.

24. Verfahren nach Anspruch 22 oder 23, dadurch **gekennzeichnet**, daß die Änderung der Lage der Kontaktelemente (14) gegenüber dem Schaltelement (9) durch Drehen des Verschlußstopfens (35) erfolgt.

## Claims

1. A vacuum brake power booster for automotive vehicles having a booster housing (1) which is subdivided by a booster piston (2) into a vacuum chamber (8) and a power chamber and is comprised of two booster housing halves, sealedly coupled to each other, including a device for monitoring the position of the booster piston (2) which is coupled to the booster housing half confining the vacuum chamber (8), and the housing of the device accommodating a switching element (9) interacting with electric contact elements (14) and actuatable by means of an actuating element (6) which is abutment against the booster piston (2) under the prestress of a compression spring (7),
**characterized** in that the actuating element (6) and the switching element (9) are arranged such as to be movable relative to each other, and in that the position of the actuating element (6) is adjustable relative to the booster piston (2).

2. A vacuum brake power booster as claimed in claim 1,
**characterized** in that the actuating element (6) passes through an opening (17) provided in the switching element (9) and retains the switching element (9) by means of an elastic, preferably ring-shaped element (11) in abutment against a stop (18) which is configured within the housing (4).

3. A vacuum brake power booster as claimed in claim 2,
**characterized** in that the elastic element (11) is positioned at the end of the actuating element (6), which projects into the housing (3), and is coupled to it by means of a positive or a friction-type locking, respectively.

4. A vacuum brake power booster as claimed in claim 1, 2 or 3,
**characterized** in that the switching element (9) is prestressed in the direction of the electric contact elements (14) by means of a compression spring (10), the spring rate of which is considerably inferior to that of the compression spring (7) which prestresses the actuating element (6).

5. A vacuum brake power booster as claimed in anyone of the preceding claims, the housing of the device for monitoring the position of the booster piston being arranged in two parts, a first housing part which is retained at the booster housing by means of an elastic sealing plug and a second housing part which constitutes a vacuum connection,
**characterized** in that the first housing part (4) includes an axial extension (13) serving to guide the actuating element (6), and air guide ducts (16).

6. A vacuum brake power booster as claimed in claim 5,
**characterized** in that the vacuum connection (15) is positioned coaxially relative to the actuating element (6).

7. A vacuum brake power booster as claimed in claim 5 or in claim 6,
**characterized** in that the electric contact elements (14) in the second housing part (5) are positioned perpendicularly to the axis of the actuating element (6) one beside the other in one plane, and in that their ends projecting from the second housing part (5) form parts of an electric plug connection (19).

8. A vacuum brake power booster as claimed in anyone of the preceding claims,
**characterized** in that the switching element (9) is configured as a cup-shaped sheet steel element and is guided by hollow cylinder segments (20) confining the air guide ducts (16) in the first housing part (4).

9. A vacuum brake power booster as claimed in claim 8,
**characterized** in that the switching element (9) is formed with a radially extending collar (21) which serves as an abutment surface for the compression spring (10) which prestresses the switching element (9).

10. A vacuum brake power booster as claimed in anyone of the preceding claims,
**characterized** in that the device for monitoring the position of the booster piston (2) comprises an arrangement (22) to monitor the vacuum.

11. A vacuum brake power booster as claimed in claim 10,
**characterized** in that within the housing (3, respectively 5) of the device a pneumatic piston (23) being subjectible to the vacuum is sealedly guided and actuates an electric contact device (24).

12. A vacuum brake power booster as claimed in claim 11,
**characterized** in that the contact device (24) is configured as a normally closed contact and consists of a resiliently prestressed contact disc (25) which interacts with a pair of contacts (26).

13. A vacuum brake power booster as claimed in claim 1,
**characterized** in that the actuating element (6) is arranged in two parts, a first part (27) which interacts with the booster piston (2) and a second part (28) which interacts with the switching element (9), the two parts being guided one within the other the way of a telescope, in that the first part (27) is prestressed in respect of the second part (28) by means of a first compression spring (29), which is positioned between them, and the second part (28) is prestressed in respect of the housing (30) by means of a second compression spring (31), which is positioned between them, and in that, in the position of rest, the first part (27) is in abutment against the second part (28) by means of an elastic bushing (32) and the second part (28) is in abutment against the housing (30) by means of the switching element (9).

14. A vacuum brake power booster as claimed in claim 13,
**characterized** in that the switching element (9) is formed of a metal contact disc (33) which is resiliently prestressed in respect of the housing (30) in the direction of the contact elements (14) and which, in the position of rest, is in abutment against an annular surface (34) configured within the housing (30).

15. A vacuum brake power booster as claimed in claim 13,
**characterized** in that the spring rate of the first compression spring (29) is larger than that of the second compression spring (31).

16. A vacuum brake power booster as claimed in claim 13 or in claim 14,
**characterized** in that the electric contact elements (14) are formed of contact lugs (36, 37) embedded in a closing plug (35) which tightly closes the housing (30).

17. A vacuum brake power booster as claimed in claim 16,
**characterized** in that the closing plug (35) has a cylindrical recess (38), the bottom (39) of which recess serves as a stop for the second part (28) of the actuating element (6) upon actuation of the brake power booster (1).

18. A vacuum brake power booster as claimed in the preamble of claim 1,
**characterized** in that the actuating element (6) and the switching element (9) are arranged so as to be movable relative to each other, in that the actuating element (6) is arranged in two parts and is comprised of a first part (27), which interacts with the booster piston (2), and a second part (28), which interacts with the switching element (9), the two parts being guided one within the other the way of a telescope, in that the first part (27) is prestressed in respect of the second part (28) by means of a first compression spring (29), which is positioned between them, and the second part (28) is prestressed in respect of the housing (30) by means of a second compression spring (31), which is positioned between them, in that, in the position of rest, the first part (27) is in abutment against the second part (28) and the second part (28) is in abutment against the housing (30) by means of the switching element (9), and in that the position of the contact elements (14) in respect of the switching element (9) is adjustable.

19. A vacuum brake power booster as claimed in claim 18,
**characterized** in that the electric contact elements (14) are formed of contact lugs (36, 37) embedded in a closing plug (35) which is screwable into the housing (30).

20. A process for the adjustment of the switching point of the device for monitoring the position of the booster piston of a vacuum brake power booster as claimed in claim 2,
**characterized** in that, upon the fixation of the housing (3) to the booster housing (1), with the elastic element (11) simultaneously abutting against the switching element (9) which is supported at the housing (4), the actuating element (6) is subjected to a force in the direction of the booster piston (2) until it abuts against the booster piston (2).

21. A process for the adjustment of the switching point of the device for monitoring the position of the booster piston of a vacuum brake power booster as claimed in claim 13,
**characterized** in that, upon the fixation of the housing (30) to the booster housing (1), with the elastic bushing (32) simultaneously abutting against the second part (28) which is supported at the housing (30), the first part (27) of the actuating element (6) is subjected to a force in the direction of the booster piston (2) until it abuts against the booster piston (2).

22. A process for the adjustment of the switching point of the device for monitoring the position of the booster piston of a vacuum brake power booster as claimed in claim 18,
**characterized** in that the distance (x) between the abutment surface (41), which is provided at the housing (30) and abuts against the sealing plug (12) in the mounted condition of the device, and the end of the first part (27) of the actuating element (6) is sized such that the first part (27) is in abutment against the booster piston (2) with axial prestress, and in that, upon mounting, the distance (y) between the contact elements (14) and the switching element (9) is modified until contact is made, whereupon the contact elements (14) are brought into a position in respect of the switching element (9) in which a small axial distance exists between them and the switching element (9).

23. A process for the adjustment of the switching point of the device for monitoring the position of the booster piston of a vacuum brake power booster as claimed in claim 18,
**characterized** in that the distance (x) between the abutment surface (41), which is provided at the housing (30) and abuts against the sealing plug (12) in the mounted condition of the device, and the end of the first part (27) of the actuating element (6) is sized such that the first part (27) is in abutment against the booster piston (2) with axial prestress, and in that, upon mounting, the switching element (9) establishes an electric connection of the contact elements (14), whereupon the contact elements (14) are brought into a position in respect of the switching element (9) in which a small axial distance exists between them and the switching element (9).

24. A process as claimed in claim 22 or in claim 23,
**characterized** in that the position of the contact elements (14) in respect of the switching element (9) is changed by rotating the closing plug (35).

## Revendications

1. Amplificateur d'effort de freinage à dépression pour véhicules automobiles, dont le carter (1) d'amplificateur est séparé par un piston amplificateur (2) en une chambre à dépression (8) et une chambre de travail, et se compose de deux demi-carters joints l'un à l'autre de façon étanche, comportant un dispositif de surveillance de la position du piston amplificateur (2), disposé sur le demi-carter d'amplificateur délimitant la chambre à dépression (8), et comportant un boîtier dans lequel est prévu un élément commutateur (9) coopérant avec des éléments de contact électrique (14) et pouvant être actionné au moyen d'un élément actionneur (6) s'appuyant, sous l'action de la précontrainte d'un ressort de pression (7), sur le piston amplificateur (2),
caractérisé en ce que l'élément actionneur (6) et l'élément commutateur (9) sont disposés de façon mobile l'un par rapport à l'autre, et en ce que la position de l'élément actionneur (6) par rapport au piston amplificateur (2) est réglable.

2. Amplificateur d'effort de freinage à dépression selon la revendication 1, caractérisé en ce que l'élément actionneur (6) traverse une ouverture (17) ménagée dans l'élément commutateur (9) et maintient l'élément commutateur (9) en appui sur une butée (18) formée sur le boîtier (4) au moyen d'une pièce élastique (11) de préférence annulaire.

3. Amplificateur d'effort de freinage à dépression selon la revendication 2, caractérisé en ce que la pièce élastique (11) est disposée sur l'extrémité de l'élément actionneur (6) qui se projette à l'intérieur du boitier (3) et est reliée à cette dernière au moyen d'une liaison géométrique ou par adhérence.

4. Amplificateur d'effort de freinage à dépression selon l'une des revendications 1, 2 ou 3, caractérisé en ce que l'élément commutateur (9) est mis sous précontrainte par un ressort de pression (10), en direction des éléments de contact électrique (14), la raideur du ressort étant considérablement plus faible que celle du ressort de pression (7) mettant sous précontrainte l'élément actionneur (6).

5. Amplificateur d'effort de freinage à dépression selon l'une des revendications précédentes, le boitier du dispositif de surveillance de la position du piston amplificateur étant réalisé en deux parties et étant composé d'une première partie de boîtier maintenue, au moyen d'un bouchon d'étanchéité élastique, dans le carter d'amplificateur, ainsi que d'une deuxième partie de boîtier constituant un raccord à "vide",
caractérisé en ce que la première partie de carter (4) comporte un prolongement axial (13) servant de guidage aux éléments actionneurs (6), et des conduites d'air (16).

6. Amplificateur d'effort de freinage à dépression selon la revendication 5, caractérisé en ce que le raccord à "vidé" (15) est disposé coaxialement à l'élément actionneur (6).

7. Amplificateur d'effort de freinage à dépression selon la revendication 5 ou 6, caractérisé en ce que les éléments de contact électrique (14) sont disposés dans la deuxième partie (5) du boîtier, perpendiculairement à l'axe de l'élément actionneur (6), de façon juxtaposée dans un plan, et en ce que leurs extrémités saillant hors de la deuxième partie (5) du boîtier font partie d'un connecteur électrique (19) à fiche .

8. Amplificateur d'effort de freinage à dépression selon l'une des revendications précédentes, caractérisé en ce que l'élément commutateur (9) est réalisé sous forme d'une pièce en tôle en forme de cloche et est guidé par des segments cylindriques creux (20) délimitant les conduites d'air (16) ménagées dans la première partie (4) du boîtier.

9. Amplificateur d'effort de freinage à dépression selon la revendication 8, caractérisé en ce que l'élément commutateur (9) comporte une collerette (21) s'étendant radialement, servant de surface d'appui pour le ressort de pression (10) mettant sous précontrainte l'élément commutateur (9).

10. Amplificateur d'effort de freinage à dépression selon l'une quelconque des revendications précédentes, caractérisé en ce que le dispositif de surveillance de la position du piston amplificateur (2) comporte un dispositif (22) de surveillance de la dépression.

11. Amplificateur d'effort de freinage à dépression selon la revendication 10, caractérisé en ce qu'un piston pneumatique (23) pouvant être soumis à l'action de la dépression est guidé de façon étanche dans le boîtier (3 ou 5), ce piston actionnant un dispositif contacteur électrique (24).

12. Amplificateur d'effort de freinage à dépression selon la revendication 11, caractérisé en ce que le dispositif contacteur (24) est réalisé sous forme d'un contact de rupture et est composé d'une rondelle de contact (25) élastiquement précontrainte, qui coopère avec une paire de contacts (26).

13. Amplificateur d'effort de freinage à dépression selon la revendication 1, caractérisé en ce que l'élément actionneur (6) est réalisé en deux parties et est composé d'une première partie (27) coopérant avec le piston amplificateur (2) ainsi que d'une deuxième partie (28) coopérant avec l'élément commutateur (9), les deux parties étant guidées télescopiquement l'une dans l'autre, en ce que la première partie (27) est mise sous précontrainte par rapport à la deuxième partie (28), au moyen d'un premier ressort de pression (29) disposé entre celles-ci, et que la deuxième partie (28) est mise sous précontrainte par rapport au boîtier (30), au moyen d'un deuxième ressort de pression (31), et en ce qu'en position de repos, la première partie (27) s'appuie, par l'intermédiaire d'une douille élastique (32), sur la deuxième partie (28), et que la deuxième partie (28) s'appuie, par l'intermédiaire de l'élément commutateur (9), sur le boîtier (30).

14. Amplificateur d'effort de freinage à dépression selon la revendication 13, caractérisé en ce que l'élément commutateur (9) est constitué par une rondelle de contact métallique (33) élastiquement précontrainte par rapport au boîtier (30), en direction des éléments de contact (14), et reposant, en position de repos, sur une surface annulaire (34) ménagée dans le boîtier (30).

15. Amplificateur d'effort de freinage à dépression selon la revendication 13, caractérisé en ce que la raideur du premier ressort de pression (29) est supérieure à celle du deuxième ressort de pression (31).

16. Amplificateur d'effort de freinage à dépression selon la revendication 13 ou 14, caractérisé en ce que les éléments de contact électrique (14) sont constitués par des languettes de contact (36, 37) scellées dans un bouchon (35) fermant de façon étanche le boîtier (30).

17. Amplificateur d'effort de freinage à dépression selon la revendication 16, caractérisé en ce que le bouchon (35) comporte un évidement cylindrique (38) dont le fond (39) sert, lors de l'actionnement de l'amplificateur d'effort de freinage (1), de butée à la deuxième partie (28) de l'élément actionneur (6).

18. Amplificateur d'effort de freinage à dépression selon le préambule de la revendication 1, caractérisé en ce que l'élément actionneur (6) et l'élément commutateur (9) sont disposés de façon mobile l'un par rapport à l'autre, en ce que l'élément actionneur (6) est réalisé en deux parties et est composé d'une première partie (27) coopérant avec le piston amplificateur (2) et d'une deuxième partie (28) coopérant avec l'élément commutateur (9), les deux parties s'emboîtant télescopiquement l'une dans l'autre, en ce que la première partie (27) est mise sous précontrainte par rapport à la deuxième partie (28) au moyen d'un premier ressort de pression (29) disposé entre celles-ci, et que la deuxième partie (28) est mise sous précontrainte par rapport au boîtier (30) au moyen d'un deuxième ressort de pression (31) disposé entre ceux-ci, en ce qu'en position de repos, la première partie (27) repose sur la deuxième partie (28) et la deuxième partie (28) repose par l'intermédiaire de l'élément commutateur (9) sur le boîtier (30), et en ce que la position des éléments de contact (14) par rapport à l'élément commutateur (9) est réglable.

19. Amplificateur d'effort de freinage à dépression selon la revendication 18, caractérisé en ce que les éléments de contact électrique (14) sont réalisés sous forme de languettes de contact (36, 37) scellées dans un bouchon (35) pouvant être vissé dans le boîtier (30).

20. Procédé de réglage du point de commutation du dispositif de surveillance de la position du piston amplificateur d'un amplificateur d'effort de freinage à dépression selon la revendication 2, caractérisé en ce qu'après la fixation du boîtier (3) sur le carter d'amplificateur (1), l'élément actionneur (6) est soumis à l'action d'une force dirigée en direction du piston amplificateur (2), jusqu'à ce qu'il vienne en appui sur le piston amplificateur (2), en mettant en même temps la pièce élastique (11) en appui sur l'élément commutateur (9) prenant appui sur le boîtier (4).

21. Procédé de réglage du point de commutation du dispositif de surveillance de la position du piston amplificateur d'un amplificateur d'effort de freinage à dépression selon la revendication 13, caractérisé en ce qu'après la fixation du boîtier (30) sur le carter d'amplificateur (1), la première partie (27) de l'élément actionneur (6) est soumise à l'action d'une force dirigée en direction du piston amplificateur (2), jusqu'à ce qu'elle vienne en appui sur le piston amplificateur (2), en mettant en même temps la douille élastique (32) en appui sur la deuxième partie (28) prenant appui sur le boîtier (30).

22. Procédé de réglage du point de commutation du dispositif de surveillance de la position du piston amplificateur d'un amplificateur d'effort de freinage à dépression selon la revendication 18, caractérisé en ce que la distance (x) comprise entre la surface d'appui (41) ménagée dans le boîtier (30), placée en contact avec le bouchon d'étanchéité (12) lorsque le dispositif est installé, et l'extrémité de la première partie (27) de l'élément actionneur (6) est calculée de façon telle que la première partie (27) s'appuie, sous une précontrainte axiale, sur le piston amplificateur (2), et en ce qu'après l'installation, la distance (y) comprise entre les éléments de contact électrique (14) et l'élément commutateur (9) est modifiée jusqu'a ce qu'un contact s'établisse, ce après quoi les éléments de contact (14) sont amenés dans une position par rapport à l'élément commutateur (9), dans laquelle une faible distance axiale existe entre ceux-ci et l'élément commutateur (9).

23. Procédé de réglage du point de commutation du dispositif de surveillance de la position du piston amplificateur d'un amplificateur d'effort de freinage à dépression selon la revendication 18, caractérisé en ce que la distance (x) comprise entre la surface d'appui (41) ménagée dans le boîtier (30), placée en contact avec le bouchon d'étanchéité (12) lorsque le dispositif est installé, et l'extrémité de la première partie (27) de l'élément actionneur (6) est calculée de façon telle que la première partie (27) s'appuie, sous une précontrainte axiale, sur le piston amplificateur (2), et en ce que l'élément commutateur (9) établit, après l'installation, une connexion électrique entre les éléments de contact (14), ce après quoi les éléments de contact (14) sont amenés dans une position par rapport à l'élément commutateur (9), dans laquelle une faible distance axiale existe entre ceux-ci et l'élément commutateur (9).

24. Procédé selon la revendication 22 ou 23, caractérisé en ce que la modification de la position des éléments de contact (14) par rapport à l'élément commutateur (9) s'effectue par rotation du bouchon (35).
